# EUROPEAN PATENT APPLICATION

(11) **EP 4 510 103 A1**
(43) Date of publication of application: **19.02.2025**
(21) Application number: 23722657.6
(22) Date of filing: 03.04.2023
(51) Int. Cl.: G08G 1/00

(54) **CONTROL DEVICE AND CONTROL METHOD**

(30) Priority: 11.04.2022 JP 2022064865
(71) Applicant: Robert Bosch GmbH, 70442 Stuttgart (DE)
(72) Inventor: PFAU, Lars, Yokohama-shi, Kanagawa 224-8501 (JP); MOLDOVAN, Adrian-Alexandru, Yokohama-shi, Kanagawa 224-8501 (JP)
(74) Representative: Isarpatent
(86) International application number: PCT/IB2023/053358
(87) International publication number: WO 2023/199166

(57) **Abstract**

The invention obtains a controller and a control method capable of appropriately assisting with driving by a rider of a motorcycle in group travel.

In the controller and the control method according to the invention, an execution section of a controller 20 executes driving assistance operation to assist with driving by the rider. Furthermore, in the case where the group travel in which a group made up of plural motorcycles travels in plural vehicle lines is made, an identification section of the controller 20 identifies in first identification processing whether a vehicle line identification target vehicle, which is the motorcycle constituting the group, is positioned in a first vehicle line, to which a vehicle line identification reference vehicle, which is the motorcycle constituting the group belongs, or is positioned in a second vehicle line, to which the vehicle line identification reference vehicle does not belong, on the basis of surrounding environment information of the vehicle line identification target vehicle. The execution section executes the driving assistance operation on the basis of an identification result by the identification section.

## Description

### Technical Field

The present disclosure relates to a controller and a control method capable of appropriately assisting with driving by a rider of a motorcycle in group travel.

### Background Art

Conventionally, various techniques for assisting with driving by a rider of a motorcycle have been proposed. For example, a driver-assistance system is disclosed in PTL 1. The driver-assistance system warns the rider of the motorcycle that the motorcycle inappropriately approaches an obstacle on the basis of information detected by a sensor device that detects the obstacle present in a travel direction or substantially in the travel direction.

### Citation List

### Patent Literature

PTL 1: JP2009-116882A

### Summary of Invention

### Technical Problem

It is important to appropriately execute driving assistance operation for assisting with driving by the rider according to a traffic condition around an own vehicle. Here, there is a case where group travel is made in which a group made up of the plural motorcycles travels in plural vehicle lines. When the group travel is made, the traffic condition around the own vehicle differs from that of a case where the group travel is not made. Thus, a proposal for optimizing the driving assistance operation in such group travel has been desired.

The invention has been made with the above-described problem as the background and therefore obtains a controller and a control method capable of appropriately assisting with driving by a rider of a motorcycle in group travel. Solution to Problem

A controller according to the invention is a controller for a rider-assistance system that assists with driving by a rider, includes an execution section that executes driving assistance operation to assist with driving by the rider, and further includes an identification section. In the case where group travel in which a group made up of plural motorcycles travels in plural vehicle lines is made, the identification section identifies in first identification processing whether a vehicle line identification target vehicle, which is the motorcycle constituting the group, is positioned in a first vehicle line, to which a vehicle line identification reference vehicle as the motorcycle constituting the group belongs, or is positioned in a second vehicle line, to which the vehicle line identification reference vehicle does not belong, on the basis of surrounding environment information of the vehicle line identification target vehicle. The execution section executes the driving assistance operation on the basis of an identification result by the identification section.

A control method according to the invention is a control method for a rider-assistance system that assists with driving by a rider. The control method includes: executing driving assistance operation to assist with driving by the rider by an execution section of a controller, and further includes: in the case where group travel in which a group made up of plural motorcycles travels in plural vehicle lines is made, identifying in first identification processing by an identification section of the controller whether a vehicle line identification target vehicle, which is the motorcycle constituting the group, is positioned in a first vehicle line, to which a vehicle line identification reference vehicle as the motorcycle constituting the group belongs, or is positioned in a second vehicle line, to which the vehicle line identification reference vehicle does not belong, on the basis of surrounding environment information of the vehicle line identification target vehicle. The execution section executes the driving assistance operation on the basis of an identification result by the identification section.

### Advantageous Effects of Invention

In the controller and the control method according to the invention, the execution section of the controller executes the driving assistance operation to assist with driving by the rider. Furthermore, in the case where the group travel in which the group made up of the plural motorcycles travels in the plural vehicle lines is made, the identification section of the controller identifies in the first identification processing whether the vehicle line identification target vehicle, which is the motorcycle constituting the group, is positioned in the first vehicle line, to which the vehicle line identification reference vehicle, which is the motorcycle constituting the group belongs, or is positioned in the second vehicle line, to which the vehicle line identification reference vehicle does not belong, on the basis of the surrounding environment information of the vehicle line identification target vehicle. The execution section executes the driving assistance operation on the basis of the identification result by the identification section. In this way, in the case where the group travel is made, it is possible to appropriately execute the driving assistance operation according to a traffic condition around an own vehicle. Therefore, it is possible to appropriately assist with driving by the rider of the motorcycle in the group travel.

### Brief Description of Drawings

Fig. 1 is a schematic view illustrating an outline configuration of a motorcycle according to an embodiment of the present invention.
Fig. 2 is a block diagram illustrating an exemplary functional configuration of a controller according to the embodiment of the invention.
Fig. 3 is a view illustrating a situation where a group including the motorcycle according to the embodiment of the invention makes group travel.
Fig. 4 is a flowchart illustrating an example of an overall processing procedure that is related to the group travel and is executed by the controller according to the embodiment of the invention.
Fig. 5 is a view illustrating a situation where a detection range of surrounding environment information, which is used for adaptive cruise control executed by the motorcycle according to the embodiment of the invention, is changed.
**Fig.** 6 is a flowchart illustrating a flow of a first example of identification processing that is executed by the controller according to the embodiment of the invention.
**Fig.** 7 is a view illustrating a case where a lateral distance between the motorcycle according to the embodiment of the invention and another vehicle is shorter than a first reference distance.
Fig. 8 is a view illustrating a case where the lateral distance between the motorcycle according to the embodiment of the invention and the other vehicle is longer than a second reference distance.
Fig. 9 is a view illustrating a case where the lateral distance between the motorcycle according to the embodiment of the invention and the other vehicle is longer than the first reference distance and shorter than the second reference distance.
Fig. 10 is a view illustrating a situation where the group including the motorcycle according to the embodiment of the invention travels a curve.
Fig. 11 is a flowchart illustrating a flow of a second example of the identification processing that is executed by the controller according to the embodiment of the invention.

### Description of Embodiments

A description will hereinafter be made on a controller and a control method according to the invention with reference to the drawings.

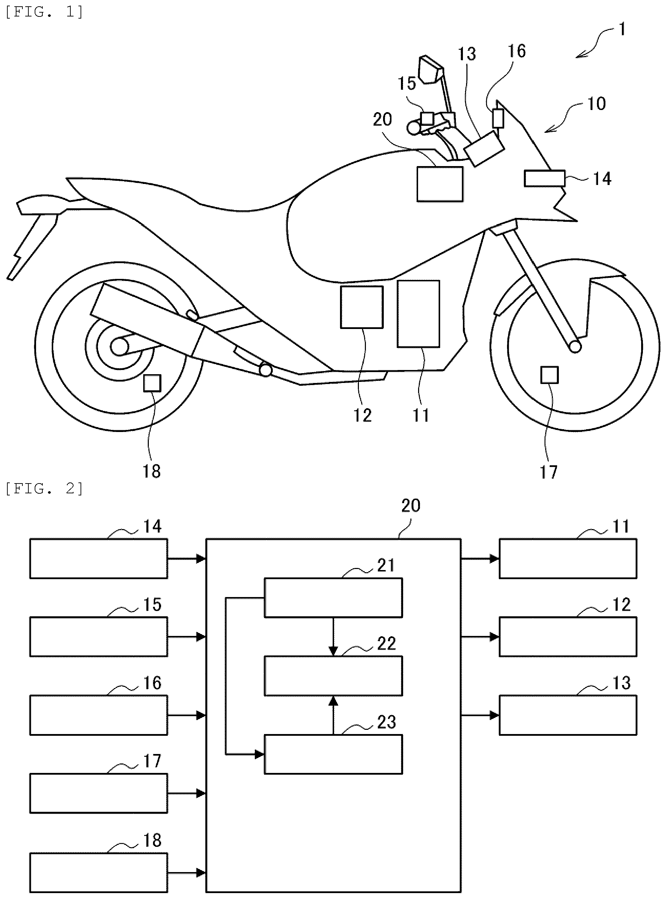

The following description will be made on the controller that is used for a two-wheeled motorcycle (see a motorcycle 1 in Fig. 1). However, a vehicle as a control target of the controller according to the invention may be a motorcycle other than the two-wheeled motorcycle. The motorcycles include a vehicle having an engine as a power source, a vehicle having an electric motor as the power source, and the like. Examples of the motorcycles are a motorbike, a scooter, and an electric scooter.

A configuration, operation, and the like, which will be described below, merely constitute one example. The controller and the control method according to the invention are not limited to a case with such a configuration, such operation, and the like.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Motorcycle>

A description will be made on a configuration of a motorcycle 1 according to an embodiment of the invention with reference to Fig. 1 to Fig. 3.

Fig. 1 is a schematic view illustrating an outline configuration of the motorcycle 1. As illustrated in Fig. 1, the motorcycle 1 includes an engine 11, a hydraulic pressure control unit 12, a display device 13, a surrounding environment sensor 14, an input device 15, a navigation system 16, a front-wheel rotational frequency sensor 17, a rear-wheel rotational frequency sensor 18, and a controller (ECU) 20. In the present specification, the motorcycle 1 will also be referred to as an own vehicle 1.

The motorcycle 1 includes a rider-assistance system 10 that assists a rider in driving the motorcycle 1. The rider-assistance system 10 includes the above components (that is, the engine 11, the hydraulic pressure control unit 12, the display device 13, the surrounding environment sensor 14, the input device 15, the navigation system 16, the front-wheel rotational frequency sensor 17, the rear-wheel rotational frequency sensor 18, and the controller 20).

The engine 11 corresponds to an example of a drive source of the motorcycle 1 and can output power for driving a wheel. For example, the engine 11 is provided with: one or plural cylinders, each of which is formed with a combustion chamber therein; a fuel injector that injects fuel into the combustion chamber; and an ignition plug. When the fuel is injected from the fuel injector, air-fuel mixture containing air and the fuel is produced in the combustion chamber, and the air-fuel mixture is then ignited by the ignition plug and burned. Consequently, a piston provided in the cylinder reciprocates to cause a crankshaft to rotate. In addition, a throttle valve is provided to an intake pipe of the engine 11, and an intake air amount for the combustion chamber varies according to a throttle opening amount as an opening degree of the throttle valve.

The hydraulic pressure control unit 12 is a unit that has a function to control a braking force to be generated on the wheel. For example, the hydraulic pressure control unit 12 includes components (for example, a control valve and a pump) that are provided to an oil channel connecting a master cylinder and a wheel cylinder and control a brake hydraulic pressure in the wheel cylinder. The braking force to be generated on the wheel is controlled by controlling operation of the components in the hydraulic pressure control unit 12. The hydraulic pressure control unit 12 may control the braking force to be generated on each of a front wheel and a rear wheel or may only control the braking force to be generated on one of the front wheel and the rear wheel.

The display device 13 has a display function to display information visually. Examples of the display device 13 are a liquid-crystal display and a lamp.

The surrounding environment sensor 14 detects surrounding environment information that is related to environment around the motorcycle 1. More specifically, the surrounding environment sensor 14 is provided to a front portion of a trunk of the motorcycle 1, and detects the surrounding environment information in front of the own vehicle 1.

The surrounding environment information detected by the surrounding environment sensor 14 may be information on a distance to or an orientation of a target object positioned around the motorcycle 1 (for example, a relative position, a relative distance, a relative speed, relative acceleration, or the like), or may be a characteristic of the target object positioned around the motorcycle 1 (for example, a type of the target object, a shape of the target object itself, a mark on the target object, or the like). Examples of the surrounding environment sensor 14 are a radar, a Lidar sensor, an ultrasonic sensor, and a camera.

The surrounding environment information can also be detected by a surrounding environment sensor that is mounted to another vehicle or by an infrastructure facility. In other words, the controller 20 can also acquire the surrounding environment information via wireless communication with the other vehicle or the infrastructure facility.

The input device 15 accepts various operations by the rider. For example, the input device 15 is provided to a handlebar and includes a push button and the like used for the rider's operation. Information on the rider's operation using the input device 15 is output to the controller 20.

The navigation system 16 is a system that guides the rider along a route from a current position of the motorcycle 1 to a destination desired by the rider. The navigation system 16 displays various types of information on route guidance (for example, the current position of the motorcycle 1, a travel route as a guidance target, a location of the destination, a distance on the travel route from the current position of the motorcycle 1 to the destination, duration before arrival at the destination, and the like). In addition, the navigation system 16 can acquire position information of the motorcycle 1 on the basis of information that is sent from the Global Positioning System (GPS) satellite. The navigation system 16 can also acquire shape information (for example, information on a curvature or the like) of a travel road on which the motorcycle 1 travels on the basis of map information or the like.

The front-wheel rotational frequency sensor 17 is a wheel rotational frequency sensor that detects a rotational frequency of the front wheel (for example, a rotational frequency of the front wheel per unit time [rpm], a travel distance of the front wheel per unit time [km/h], or the like), and outputs a detection result. The front-wheel rotational frequency sensor 17 may detect another physical quantity that can substantially be converted to the rotational frequency of the front wheel. The front-wheel rotational frequency sensor 17 is provided to the front wheel.

The rear-wheel rotational frequency sensor 18 is a wheel rotational frequency sensor that detects a rotational frequency of the rear wheel (for example, the rotational frequency of the rear wheel per unit time [rpm], a travel distance of the rear wheel per unit time [km/h], or the like), and outputs a detection result. The rear-wheel rotational frequency sensor 18 may detect another physical quantity that can substantially be converted to the rotational frequency of the rear wheel. The rear-wheel rotational frequency sensor 18 is provided to the rear wheel.

The controller 20 controls the rider-assistance system 10. For example, a part of the controller 20 or the entire controller 20 includes a microcomputer, a microprocessor unit, or the like. Alternatively, the part of the controller 20 or the entire controller 20 may be one whose firmware and the like can be updated, or may be a program module or the like that is executed by a command from a CPU or the like, for example. The controller 20 may be provided as one unit or may be divided into plural units, for example.

Fig. 2 is a block diagram illustrating an exemplary functional configuration of the controller 20. As illustrated in Fig. 2, the controller 20 includes an acquisition section 21, an execution section 22, and an identification section 23, for example. The controller 20 communicates with each of the devices in the rider-assistance system 10.

The acquisition section 21 acquires information from each of the devices in the rider-assistance system 10, and outputs the acquired information to the execution section 22 and the identification section 23. For example, the acquisition section 21 acquires the information from the surrounding environment sensor 14, the input device 15, the navigation system 16, the front-wheel rotational frequency sensor 17, and the rear-wheel rotational frequency sensor 18. In the present specification, the acquisition of the information can include extraction, generation, and the like of the information.

The execution section 22 executes driving assistance operation by the rider-assistance system 10. The driving assistance operation is operation to assist with driving by the rider, and can include various types of the operation. For example, the driving assistance operation can include vehicle control operation including adaptive cruise control or operation such as notification operation. The vehicle control operation is operation to control behavior of the own vehicle 1. The notification operation is operation to notify the rider. A detailed description on these types of the operation will be made below. In the driving assistance operation, the execution section 22 appropriately controls operation of the engine 11, the hydraulic pressure control unit 12, and the display device 13.

The identification section 23 executes identification processing to identify a vehicle line in which a vehicle line identification target vehicle, which is a motorcycle constituting a group in group travel, is positioned. In the group travel, a group that is made up of the plural motorcycles including the own vehicle 1 travels in the plural vehicle lines. Of the plural motorcycles that constitute the group, the vehicle line identification target vehicle is a motorcycle as a vehicle line identification target by the identification section 23.

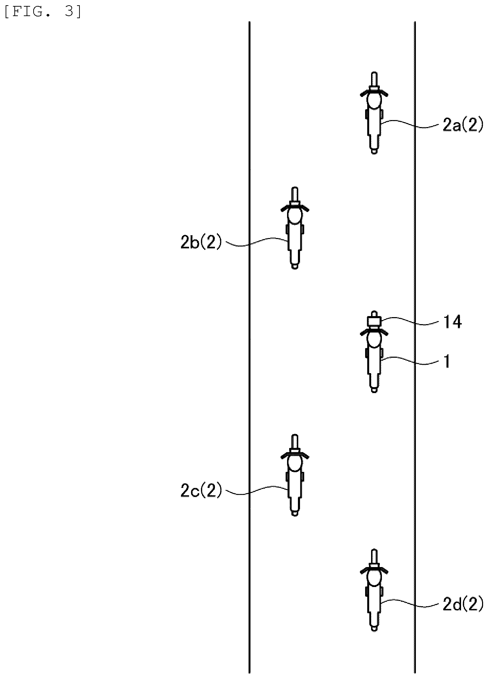

The following description will primarily be made on an example in which the vehicle line identification target vehicle is the own vehicle 1. More specifically, the following description will primarily be made on an example in which the identification section 23 identifies the vehicle line, in which the own vehicle 1 in the group is positioned (hereinafter will also be described as a vehicle line of the own vehicle 1 or an own vehicle line). However, as will be described below, the vehicle line identification target vehicle may be a vehicle other than the own vehicle 1 (for example, another vehicle 2 in Fig. 3 described below) of the plural motorcycles that constitute the group. The identification section 23 outputs an identification result to the execution section 22.

A description will herein be made on an overview of the group travel with reference to Fig. 3. Fig. 3 is a view illustrating a situation where the group including the motorcycle 1 (that is, the own vehicle 1) makes the group travel. Fig. 3 illustrates other vehicles 2a, 2b, 2c, 2d that are some of the other vehicles 2 (that is, the motorcycles other than the own vehicle 1 in the group) constituting the group. Information for identifying the other vehicle 2, which constitutes the group, may be set manually in advance in the controller 20, or may be generated automatically by the controller 20 during travel. In this way, the controller 20 can identify the other vehicle 2 that constitutes the group.

As illustrated in Fig. 3, in the group travel, the plural motorcycles travel in two vehicle lines that are a left vehicle line and a right vehicle line in the same lane. In the example illustrated in Fig. 3, the other vehicle 2b and the other vehicle 2c constitute the left vehicle line. The other vehicle 2b and the other vehicle 2c are aligned in this order from the front. Meanwhile, the other vehicle 2a, the own vehicle 1, and the other vehicle 2d constitute the right vehicle line. The other vehicle 2a, the own vehicle 1, and the other vehicle 2d are aligned in this order from the front.

In addition, as illustrated in Fig. 3, in the group travel, the plural motorcycles travel such that the motorcycles constituting the left vehicle line and the motorcycles constituting the right vehicle line are alternately arranged in a front-rear direction (that is, in a zigzag arrangement). In the example illustrated in Fig. 3, the other vehicle 2a in the right vehicle line, the other vehicle 2b in the left vehicle line, the own vehicle 1 in the right vehicle line, the other vehicle 2c in the left vehicle line, and the other vehicle 2d in the right vehicle line are arranged in this order from the front in the front-rear direction.

As described above, in the group travel made by the plural motorcycles, the plural motorcycles travel in the zigzag arrangement. Accordingly, compared to a case where the plural motorcycles travel in one vehicle line, it is possible to reduce a distance in the front-rear direction between two each of the vehicles. Thus, it is possible to suppress the group from being divided due to a traffic light.

In this embodiment, as described above, the identification section 23 identifies the vehicle line in which the vehicle line identification target vehicle (mainly, the own vehicle 1 in the following example) is positioned in the group during the group travel. Then, the execution section 22 executes the driving assistance operation on the basis of the identification result by the identification section 23. In this way, in the group travel, driving by the rider of the motorcycle 1 is appropriately assisted. Such processing related to the group travel, which is executed by the controller 20, will be described below in detail.

### <Operation of Controller>

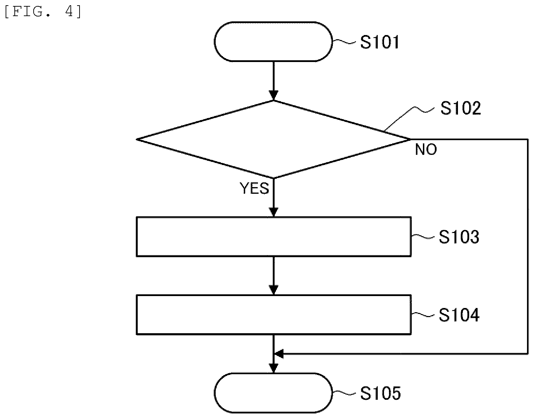

A description will be made on operation of the controller 20 according to the embodiment of the invention with reference to Fig. 4 to Fig. 11.

Hereinafter, a description will primarily be made on an example in which the execution section 22 executes the adaptive cruise control as the driving assistance operation. However, as described above, the driving assistance operation may be operation other than the adaptive cruise control.

In the adaptive cruise control, the execution section 22 automatically controls a speed of the motorcycle 1 without relying on an accelerating/decelerating operation (that is, an accelerator operation and a brake operation) by the rider. The execution section 22 monitors a value of the speed of the motorcycle 1 that is acquired on the basis of the rotational frequency of the front wheel and the rotational frequency of the rear wheel, and can thereby control the speed of the motorcycle 1 to a speed that does not exceed a preset upper-limit speed, for example.

In addition, in the adaptive cruise control, the execution section 22 executes inter-vehicular distance maintenance control to maintain an inter-vehicular distance between the motorcycle 1 and a target vehicle to a target distance. The execution section 22 executes the inter-vehicular distance maintenance control on the basis of the surrounding environment information that is detected by the surrounding environment sensor 14. The surrounding environment sensor 14 can detect an inter-vehicular distance between the motorcycle 1 and a preceding vehicle that travels ahead of the motorcycle 1, and can detect a relative speed of the motorcycle 1 to the preceding vehicle. For example, in the inter-vehicular distance maintenance control, the execution section 22 sets the preceding vehicle as the target vehicle, and controls the speed of the motorcycle 1 so as to maintain the inter-vehicular distance from the preceding vehicle to the target distance. Here, the inter-vehicular distance may mean a distance in a direction along a lane (more specifically, a travel lane of the motorcycle 1) or may mean a straight-line distance.

The execution section 22 executes the adaptive cruise control according to the rider's operation using the input device 15, for example. Here, in regard to the motorcycle 1, the rider can select a group travel mode as a mode of the adaptive cruise control. When the group travel mode is selected, the execution section 22 executes the group travel mode as the adaptive cruise control. In the adaptive cruise control, the group travel mode is a mode that is particularly suited for the group travel. For example, in the group travel mode, the target distance in the inter-vehicular distance maintenance control is set to be short.

Fig. 4 is a flowchart illustrating an example of an overall processing procedure that is related to the group travel and is executed by the controller 20. The control flow illustrated in Fig. 4 is repeatedly executed at a time interval, which is set in advance, for example. Step S101 in Fig. 4 corresponds to initiation of a control flow illustrated in Fig. 4. Step S105 in Fig. 4 corresponds to termination of the control flow illustrated in Fig. 4.

When the control flow illustrated in Fig. 4 is initiated, in step S102, the controller 20 determines whether the group travel mode is currently executed. If it is determined that the group travel mode is currently executed (step S102/YES), the processing proceeds to step S103. On the other hand, if it is determined that the group travel mode is not currently executed (step S102/NO), the control flow illustrated in Fig. 4 is terminated.

If it is determined YES in step S102, in step S103, the identification section 23 of the controller 20 executes the identification processing of the vehicle line, in which the own vehicle 1 in the group is positioned (that is, the own vehicle line). The identification section 23 executes the identification processing of the own vehicle line on the basis of the surrounding environment information of the own vehicle 1. For example, the surrounding environment information of the own vehicle 1 can be acquired on the basis of the output result by the surrounding environment sensor 14. A detailed description on the identification processing of the own vehicle line will be made below.

After step S103, in step S104, the execution section 22 of the controller 20 executes the adaptive cruise control that is based on the identification result by the identification section 23. Then, the control flow illustrated in Fig. 4 is terminated.

For example, in step S104, the execution section 22 changes a detection range of the surrounding environment information, which is used for the adaptive cruise control, on the basis of the identification result by the identification section 23. As described above, the inter-vehicular distance maintenance control in the adaptive cruise control is executed on the basis of the surrounding environment information that is detected by the surrounding environment sensor 14. The execution section 22 changes the detection range of the surrounding environment information, which is detected by the surrounding environment sensor 14, on the basis of the identification result by the identification section 23.

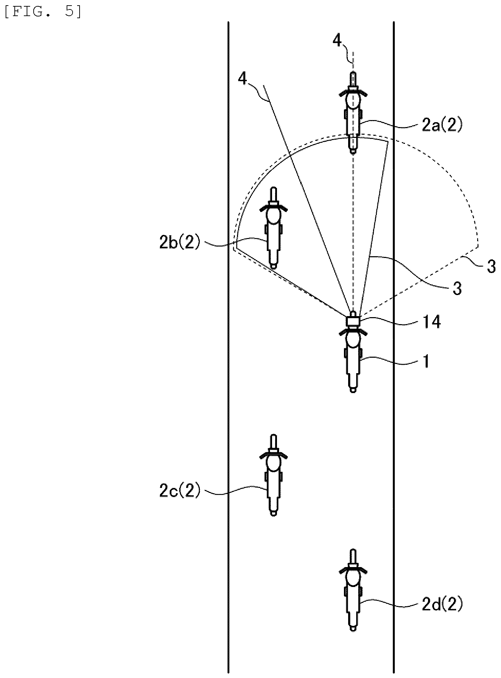

Fig. 5 is a view illustrating a situation where the detection range of the surrounding environment information, which is used for the adaptive cruise control executed by the motorcycle 1, is changed. In Fig. 5, a detection range 3 by the surrounding environment sensor 14 before the change is indicated by broken lines, and the detection range 3 after the change is indicated by solid lines.

As illustrated in Fig. 5, the detection range 3 by the surrounding environment sensor 14 expands radially to the front from a front portion of the motorcycle 1. The surrounding environment sensor 14 can detect the surrounding environment information within the detection range 3. That is, the detection range of the surrounding environment information, which is detected by the surrounding environment sensor 14, basically matches the detection range 3 by the surrounding environment sensor 14. However, as will be described below, the detection range of the surrounding environment information, which is detected by the surrounding environment sensor 14, can be changed without changing the detection range 3 by the surrounding environment sensor 14. Thus, these ranges will be described in a distinguished manner.

For example, the execution section 22 changes the detection range 3 by the surrounding environment sensor 14, and thereby changes the detection range of the surrounding environment information, which is detected by the surrounding environment sensor 14. More specifically, the execution section 22 places a center 4 of the detection range 3 by the surrounding environment sensor 14 (for example, a center axis of a radially expanding range) on a side where the other vehicle 2 in the other vehicle line (that is, the different vehicle line from the own vehicle line) exists with a swept path of the own vehicle 1 being a reference. As a result, a center of the detection range of the surrounding environment information, which is detected by the surrounding environment sensor 14, is positioned on the side where the other vehicle 2 in the other vehicle line exists with the swept path of the own vehicle 1 being the reference. Here, before the detection range 3 is changed, as indicated by a broken line, the center 4 of the detection range 3 is positioned on the swept path of the own vehicle 1.

In the example illustrated in Fig. 5, the identification section 23 identifies the right vehicle line as the own vehicle line. Thus, in this case, as indicated by a solid line, the execution section 22 places the center 4 of the detection range 3 by the surrounding environment sensor 14 to the left side with the swept path of the own vehicle 1 being the reference. As a result, the center of the detection range of the surrounding environment information, which is detected by the surrounding environment sensor 14, is positioned on the left side with the swept path of the own vehicle 1 being the reference. In this way, as indicated by the solid lines in Fig. 5, the detection range 3 by the surrounding environment sensor 14 (that is, the detection range of the surrounding environment information, which is detected by the surrounding environment sensor 14) can be placed within the travel lane of the own vehicle 1. Thus, for example, it is possible to suppress a case where a vehicle traveling on an adjacent lane that is adjacent to the travel lane of the own vehicle 1 is placed within the detection range 3 and is erroneously set as the target vehicle in the inter-vehicular distance maintenance control.

The execution section 22 may change the detection range of the surrounding environment information detected by the surrounding environment sensor 14 without changing the detection range 3 by the surrounding environment sensor 14. For example, the execution section 22 may change the detection range of the surrounding environment information by not detecting information on a particular range (for example, in the example illustrated in Fig. 5, a range on a right side with the swept path of the own vehicle 1 being the reference) within the detection range 3 as the surrounding environment information.

The above description has been made on the example in which, in step S104, the execution section 22 changes the detection range of the surrounding environment information, which is used for the adaptive cruise control. However, in step S104, as the processing for the adaptive cruise control that is based on the identification result by the identification section 23, the execution section 22 may execute processing other than the processing described above. For example, the execution section 22 may set the target vehicle for the inter-vehicular distance maintenance control in the adaptive cruise control on the basis of the identification result by the identification section 23.

The above description has been made on an example in which the adaptive cruise control is executed on the basis of the identification result by the identification section 23. However, as described above, the execution section 22 may execute, as the driving assistance operation, operation other than the adaptive cruise control.

As described above, the driving assistance operation can include the vehicle control operation to control the behavior of the own vehicle 1. That is, the execution section 22 may execute, as the driving assistance operation, the vehicle control operation other than the adaptive cruise control. Then, the execution section 22 may execute the vehicle control operation other than the adaptive cruise control on the basis of the identification result by the identification section 23. An example of the vehicle control operation other than the adaptive cruise control is collision avoidance operation. The collision avoidance operation is operation to control the behavior of the own vehicle 1 in a manner to avoid a collision between the own vehicle 1 and the surrounding vehicle. For example, the collision avoidance operation is operation to automatically generate the braking force to the own vehicle 1 in the manner to avoid a collision between the own vehicle 1 and the preceding vehicle. Similar to the example in Fig. 5, for example, the execution section 22 may change the detection range of the surrounding environment information, which is used for the collision avoidance operation, on the basis of the identification result by the identification section 23.

As described above, the driving assistance operation can include the notification operation to notify the rider. That is, the execution section 22 may execute the notification operation as the driving assistance operation. In addition, the execution section 22 may execute the notification operation on the basis of the identification result by the identification section 23. An example of the notification operation is display operation to display information on the position of the own vehicle 1 in the group (for example, the own vehicle line) on the display device 13. For example, in the display operation, information indicating the position of the own vehicle 1 itself in the group may be displayed, or information that is used to move the own vehicle 1 to the appropriate position in the group may be displayed. For example, the execution section 22 may change the information, which is displayed by the display device 13 in the display operation, on the basis of the identification result by the identification section 23. Here, the notification operation can also include operation to provide the notification by means other than the display (for example, voice output or the like).

In the flowchart in Fig. 4, which has been described above, if it is determined that the group travel mode is currently executed (step S102/YES), the processing in step S103 onward is executed. However, the execution condition to execute the processing in step S103 onward is not limited to this example. The above execution condition only needs to be a condition with which it is possible to determine that the group including the own vehicle 1 and the other vehicles 2 makes the group travel. For example, the above execution condition may be such a condition that it is determined that the own vehicle 1 and the other vehicles 2 travel in the zigzag arrangement, or the like. For example, the controller 20 acquires information on positional relationships between the own vehicle 1 and the other vehicles 2 via the wireless communication with the other vehicles 2 or the infrastructure facility, and can thereby determine whether the own vehicle 1 and the other vehicles 2 travel in the zigzag arrangement by using such information.

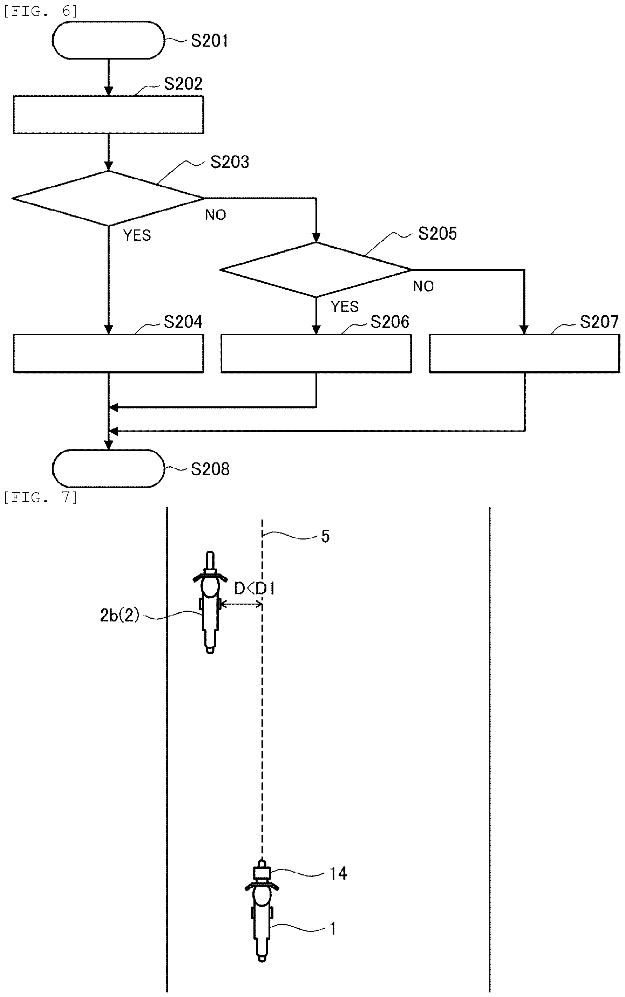

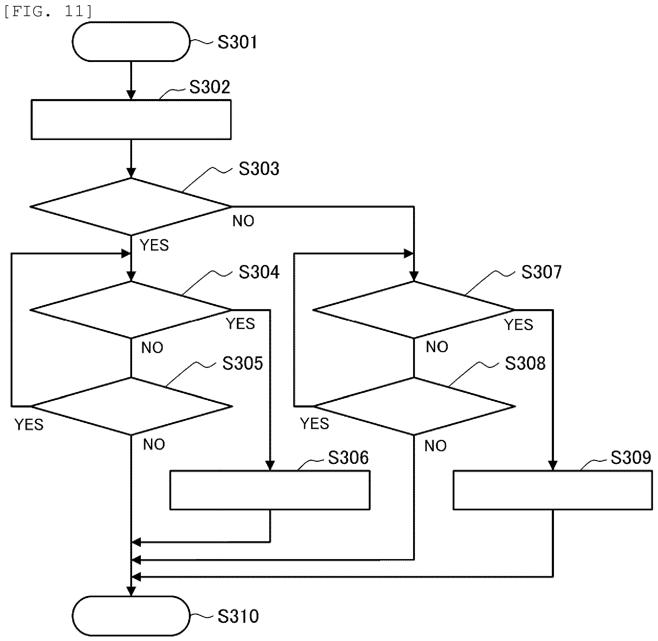

A detailed description will hereinafter be made on the identification processing of the own vehicle line executed by the identification section 23 (that is, the processing in step S103 illustrated in Fig. 4) with reference to Fig. 6 to Fig. 11. Hereinafter, as examples of the identification processing of the own vehicle line, a first example illustrated in Fig. 6 and a second example illustrated in Fig. 11 will be described in this order.

In the first example illustrated in Fig. 6, first identification processing and second identification processing are executed as the identification processing. Meanwhile, in the second example illustrated in Fig. 11, the first identification processing is executed, but the second identification processing is not executed. The first identification processing is processing to identify whether the vehicle line identification target vehicle is positioned in a first vehicle line, to which a vehicle line identification reference vehicle belongs, or in a second vehicle line, to which the vehicle line identification reference vehicle does not belong. The second identification processing is processing to identify whether the vehicle line identification target vehicle is positioned between the first vehicle line and the second vehicle line.

As described above, of the plural motorcycles that constitute the group, the vehicle line identification target vehicle is the motorcycle that serves as the vehicle line identification target by the identification section 23. Of the plural motorcycles that constitute the group, the vehicle line identification reference vehicle is the motorcycle that is referred at the time of identifying the vehicle line in which the vehicle line identification target vehicle is positioned. Hereinafter, the description will primarily be made on an example in which the vehicle line identification target vehicle is the own vehicle 1 and the vehicle line identification reference vehicle is the other vehicle 2. However, as will be described below, the vehicle line identification target vehicle may be the other vehicle 2, and the vehicle line identification reference vehicle may be the own vehicle 1.

Fig. 6 is a flowchart illustrating a flow of the first example of the identification processing that is executed by the controller 20. More specifically, in step S103 illustrated in Fig. 4, a control flow illustrated in Fig. 6 is executed by the identification section 23. Step S201 in Fig. 6 corresponds to initiation of the control flow illustrated in Fig. 6. Step S208 in Fig. 6 corresponds to termination of the control flow illustrated in Fig. 6.

When the control flow illustrated in Fig. 6 is initiated, in step S202, the identification section 23 determines a lateral distance D between the own vehicle 1 and the other vehicle 2. The lateral distance D is an inter-vehicular in a vehicle width direction. Here, the lateral distance D may be a distance between centers of the vehicles, or may be a distance between ends of the vehicles. In addition, the lateral distance D may be a distance (for example, an actually measured value) in a horizontal direction, or may be a distance in a direction that is inclined with respect to the horizontal direction. The lateral distance D may be a distance that can substantially be converted to any of these distances.

In step S202, for example, the identification section 23 identifies a relative position of the other vehicle 2 to the own vehicle 1. For example, the relative position of the other vehicle 2 to the own vehicle 1 can be identified on the basis of the output result by the surrounding environment sensor 14. Next, the identification section 23 identifies the swept path of the own vehicle 1. For example, the swept path of the own vehicle 1 can be identified on the basis of the information that is acquired from the navigation system 16. Then, the identification section 23 determines, as the lateral distance D, a distance between the swept path of the own vehicle 1 and the other vehicle 2 on the basis of the identification result of the relative position of the other vehicle 2 to the own vehicle 1 and the identification result of the swept path of the own vehicle 1.

Next, in step S203, the identification section 23 determines whether the lateral distance D is shorter than a first reference distance D1. The first reference distance D1 is set to a distance with which it is possible to determine whether the own vehicle 1 is positioned in the first vehicle line, to which the other vehicle 2 belongs. The first reference distance D1 is shorter than a second reference distance D2, which will be described below. The first reference distance D1 may be a fixed value or may be a value that varies according to any of various parameters (for example, a lane width of the travel road, and the like).

If it is determined in step S203 that the lateral distance D is shorter than the first reference distance D1 (step S203/YES), the processing proceeds to step S204. In step S204, the identification section 23 identifies that the own vehicle 1 is positioned in the first vehicle line, to which the other vehicle 2 belongs, and then the control flow illustrated in Fig. 6 is terminated.

Fig. 7 is a view illustrating a case where the lateral distance D between the motorcycle 1 (that is, the own vehicle 1) and the other vehicle 2b is shorter than the first reference distance D1. In the example illustrated in Fig. 7, the plural motorcycles constituting the group travel straight. Thus, as illustrated in Fig. 7, a swept path 5 of the own vehicle 1 has a straight-line shape. In addition, in the example illustrated in Fig. 7, the lateral distance D between the other vehicle 2b, which belongs to the left vehicle line, and the own vehicle 1 is shorter than the first reference distance D1. Here, the first vehicle line, to which the other vehicle 2b belongs, is the left vehicle line. Thus, the identification section 23 identifies that the own vehicle 1 is positioned in the left vehicle line.

If it is not determined in step S203 illustrated in Fig. 6 that the lateral distance D is shorter than the first reference distance D1 (step S203/NO), the processing proceeds to step S205. In step S205, the identification section 23 determines whether the lateral distance D is longer than the second reference distance D2. The second reference distance D2 is set to a distance with which it is possible to determine whether the own vehicle 1 is positioned in the second vehicle line, to which the other vehicle 2 does not belong. Similar to the first reference distance D1, the second reference distance D2 may be a fixed value or may be a value that varies according to any of the various parameters (for example, the lane width of the travel road, and the like).

If it is determined in step S205 that the lateral distance D is longer than the second reference distance D2 (step S205/YES), the processing proceeds to step S206. In step S206, the identification section 23 identifies that the own vehicle 1 is positioned in the second vehicle line, to which the other vehicle 2 does not belong, and then the control flow illustrated in Fig. 6 is terminated.

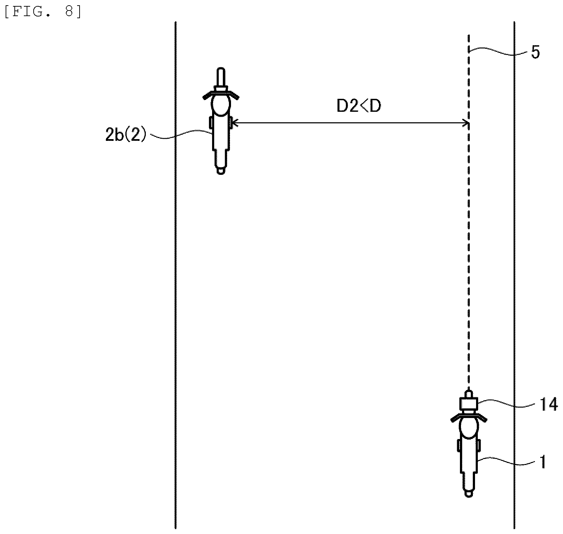

Fig. 8 is a view illustrating a case where the lateral distance D between the motorcycle 1 (that is, the own vehicle 1) and the other vehicle 2b is longer than the second reference distance D2. Similar to the example in Fig. 7, in the example illustrated in Fig. 8, the plural motorcycles constituting the group travel straight, and the swept path 5 of the own vehicle 1 has the straight-line shape. In addition, in the example illustrated in Fig. 8, the lateral distance D between the other vehicle 2b, which belongs to the left vehicle line, and the own vehicle 1 is longer than the second reference distance D2. Here, the second vehicle line, to which the other vehicle 2b does not belong, is the right vehicle line. Thus, the identification section 23 identifies that the own vehicle 1 is positioned in the right vehicle line.

If it is not determined in step S205 illustrated in Fig. 6 that the lateral distance D is longer than the second reference distance D2 (step S205/NO), the processing proceeds to step S207. The case where it is determined NO in step S205 corresponds to a case where the lateral distance D is longer than the first reference distance D1 and shorter than the second reference distance D2. In this case, in step S207, the identification section 23 identifies that the own vehicle 1 is positioned between the first vehicle line and the second vehicle line, and then the control flow illustrated in Fig. 6 is terminated.

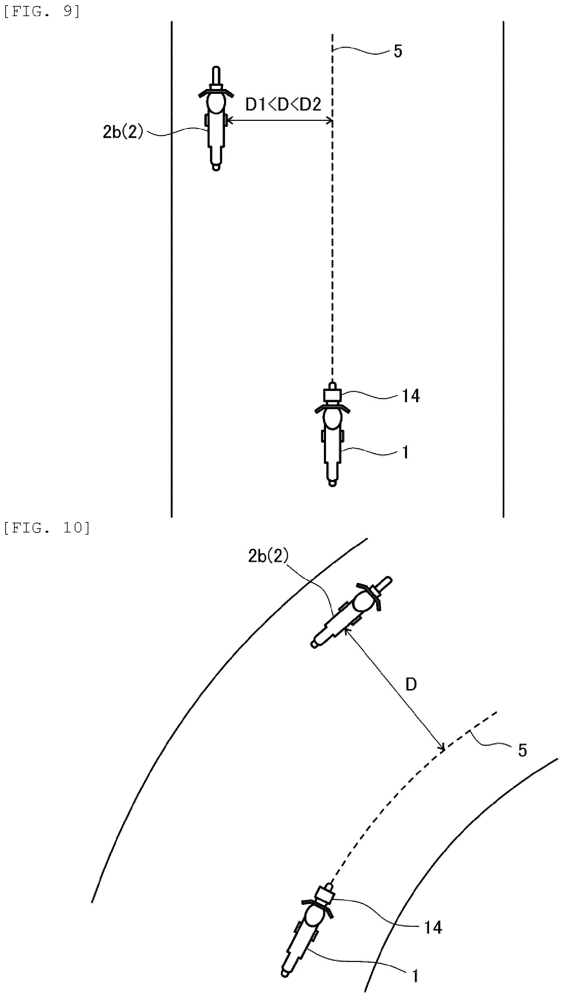

Fig. 9 is a view illustrating a case where the lateral distance D between the motorcycle 1 (that is, the own vehicle 1) and the other vehicle 2b is longer than the first reference distance D1 and shorter than the second reference distance D2. Similar to the example in Fig. 7 and the example in Fig. 8, in the example illustrated in Fig. 9, the plural motorcycles constituting the group travel straight, and the swept path 5 of the own vehicle 1 has the straight-line shape. In addition, in the example illustrated in Fig. 9, the lateral distance D between the other vehicle 2b, which belongs to the left vehicle line, and the own vehicle 1 is longer than the first reference distance D1 and shorter than the second reference distance D2. Thus, the identification section 23 identifies that the own vehicle 1 is positioned between the left vehicle line and the right vehicle line.

As it has been described so far, in the first example illustrated in Fig. 6, as the identification processing to identify the position of the own vehicle 1 in the group, the identification section 23 executes the first identification processing (more specifically, the processing to identify whether the own vehicle 1 is positioned in the first vehicle line, to which the other vehicle 2 belongs, or is positioned in the second vehicle line, to which the other vehicle 2 does not belong) and the second identification processing (more specifically, the processing to identify whether the own vehicle 1 is positioned between the first vehicle line and the second vehicle line). In this way, it is possible to identify whether the own vehicle 1 is positioned in the first vehicle line, is positioned in the second vehicle line, or is positioned between the first vehicle line and the second vehicle line. Therefore, it is possible to identify the position of the own vehicle 1 in the group with a high degree of accuracy.

More specifically, the identification section 23 executes the first identification processing and the second identification processing on the basis of the lateral distance D between the own vehicle 1 and the other vehicle 2. In this way, it is possible to appropriately identify whether the own vehicle 1 is positioned in the first vehicle line, is positioned in the second vehicle line, or is positioned between the first vehicle line and the second vehicle line. In detail, in the first identification processing, in the case where the lateral distance D is shorter than the first reference distance D1 or is longer than the second reference distance D2, which is longer than the first reference distance D1, the identification section 23 identifies that the own vehicle 1 is positioned in one of the first vehicle line and the second vehicle line. In more detail, in the first identification processing, the identification section 23 identifies that the own vehicle 1 is positioned in the first vehicle line when the lateral distance D is shorter than the first reference distance D1, or identifies that the own vehicle 1 is positioned in the second vehicle line when the lateral distance D is longer than the second reference distance D2. Furthermore, in the second identification processing, in the case where the lateral distance D is longer than the first reference distance D1 and is shorter than the second reference distance D2, the identification section 23 identifies that the own vehicle 1 is positioned between the first vehicle line and the second vehicle line.

Here, the identification section 23 may determine the lateral distance D on the basis of shape information of the travel road. The shape information of the travel road can include various types of information on the shape of the travel road. An example of the shape information of the travel road is the information on the curvature of the travel road. For example, the identification section 23 may identify the swept path 5 of the own vehicle 1 on the basis of the curvature of the travel road, and may determine the lateral distance D on the basis of the identified swept path 5.

Fig. 10 is a view illustrating a situation where the group including the motorcycle 1 (that is, the own vehicle 1) travels a curve. In the example illustrated in Fig. 10, the plural motorcycles constituting the group travel the curve. Thus, the swept path 5 of the own vehicle 1 is curved. Accordingly, the swept path 5 can appropriately be identified by identifying the swept path 5 of the own vehicle 1 on the basis of the curvature of the travel road. Therefore, it is possible to appropriately determine the lateral distance D between the other vehicle 2b, which belongs to the left vehicle line, and the own vehicle 1.

Here, the lateral distance D may be a distance that is predicted in the future. For example, in the case where the lateral distance D shows a reduction tendency, the identification section 23 may predict the lateral distance D after a lapse of a specified time in consideration of a reduced speed in the lateral distance D, and may then execute the identification processing (for example, the above-described processing illustrated in Fig. 6) to identify the position of the own vehicle 1 in the group by using the predicted future lateral distance D. In this way, compared to the case where the identification processing is executed by using the current lateral distance D, it is possible to suppress a delay in reflection of the change in the lateral distance D to the driving assistance operation.

In the case where the first identification processing and the second identification processing are executed on the basis of the lateral distance D, regardless of how the first identification processing and the second identification processing are executed, the identification section 23 may determine the lateral distance D on the basis of the shape information of the travel road, or may determine the lateral distance D not on the basis of the shape information of the travel road. Alternatively, in the case where the first identification processing and the second identification processing are executed on the basis of the lateral distance D, regardless of how the first identification processing and the second identification processing are executed, the lateral distance D may be the predicted distance in the future or may be the current lateral distance D.

The above description has been made on the example in which, as the threshold values for identifying the position of the own vehicle 1 in the group, the two threshold values as the first reference distance and the second reference distance are used. However, three or more types of the reference distance used as the threshold value may be provided. In this way, it is possible to identify the position of the own vehicle 1 in the group with the high degree of accuracy. For example, in the case where the lateral distance D is shorter than the first reference distance D1, it is possible to further accurately identify the position of the own vehicle 1 in the group by additionally using a reference distance that is shorter than the first reference distance D1. In addition, for example, in the case where the lateral distance D is longer than the second reference distance D2, it is possible to further accurately identify the position of the own vehicle 1 in the group by additionally using a reference distance that is longer than the second reference distance D2.

The above description has primarily been made on the example in which, of the plural other vehicles 2, the vehicle line identification reference vehicle is the other vehicle 2b with reference to Fig. 7 to Fig. 10. However, in the case where the vehicle line identification target vehicle is the own vehicle 1 and the vehicle line identification reference vehicle is the other vehicle 2, the vehicle line identification reference vehicle may be the other vehicle 2 other than the other vehicle 2b.

Fig. 11 is a flowchart illustrating a flow of the second example of the identification processing that is executed by the controller 20. More specifically, in step S103 illustrated in Fig. 4, a control flow illustrated in Fig. 11 is executed by the identification section 23. Step S301 in Fig. 11 corresponds to initiation of the control flow illustrated in Fig. 11. Step S310 in Fig. 11 corresponds to termination of the control flow illustrated in Fig. 11.

When the control flow illustrated in Fig. 11 is initiated, in step S302, the identification section 23 determines the lateral distance D between the own vehicle 1 and the other vehicle 2. The processing in step S302 is the same as the processing in step S202 illustrated in Fig. 6.

Next, in step S303, the identification section 23 determines whether the lateral distance D is shorter than a third reference distance D3. The third reference distance D3 is set to a distance with which it is possible to determine whether the vehicle line, in which the own vehicle 1 is positioned, is the first vehicle line, to which the other vehicle 2 belongs, or the second vehicle line, to which the other vehicle 2 does not belong. For example, the third reference distance D3 is longer than the above-described first reference distance D1 and is shorter than the above-described second reference distance D2. The case where the lateral distance D is shorter than the third reference distance D3 corresponds to the case where the own vehicle 1 is positioned in the first vehicle line. Meanwhile, the case where the lateral distance D is longer than the third reference distance D3 corresponds to the case where the own vehicle 1 is positioned in the second vehicle line. Similar to the first reference distance D1 and the second reference distance D2, the third reference distance D3 may be a fixed value or may be a value that varies according to any of the various parameters (for example, the lane width of the travel road, and the like).

If it is determined in step S303 that the lateral distance D is shorter than the third reference distance D3 (step S303/YES), the processing proceeds to step S304. In step S304, the identification section 23 determines whether a reference time has elapsed after the processing in step S303. If it is not determined in step S304 that the reference time has elapsed (step S304/NO), the processing proceeds to step S305.

In step S305, the identification section 23 determines whether the lateral distance D is shorter than the third reference distance D3. If it is determined in step S305 that the lateral distance D is shorter than the third reference distance D3 (step S305/YES), the processing proceeds to step S304. On the other hand, if it is not determined in step S305 that the lateral distance D is shorter than the third reference distance D3 (step S305/NO), the control flow illustrated in Fig. 11 is terminated.

While it is determined NO in step S304 and it is determined YES in step S305, the processing in step S304 and the processing in step S305 are repeated. Then, if it is determined in step S304 that the reference time has elapsed (step S304/YES), the processing proceeds to step S306. In step S306, the identification section 23 identifies that the own vehicle 1 is positioned in the first vehicle line, to which the other vehicle 2 belongs, and then the control flow illustrated in Fig. 11 is terminated.

As described above, the case where it is determined YES in step S304 is the case where it is determined YES in step S305 at least for the reference time. Thus, such a case corresponds to a case where the own vehicle 1 remains positioned in the first vehicle line at least for the reference time. That is, in the second example illustrated in Fig. 11, in the case where the own vehicle 1 remains positioned in the first vehicle line at least for the reference time, the identification section 23 identifies that the own vehicle 1 is positioned in the first vehicle line. The reference time in step S304 may be a fixed value or may be a value that varies according to any of the various parameters (for example, the position of the own vehicle 1 in the front-rear direction in the group, and the like).

If it is not determined in step S303 that the lateral distance D is shorter than the third reference distance D3 (step S303/NO), the processing proceeds to step S307. In step S307, the identification section 23 determines whether the reference time has elapsed after the processing in step S303. If it is not determined in step S307 that the reference time has elapsed (step S307/NO), the processing proceeds to step S308.

In step S308, the identification section 23 determines whether the lateral distance D is longer than the third reference distance D3. If it is determined in step S308 that the lateral distance D is longer than the third reference distance D3 (step S308/YES), the processing returns to step S307. On the other hand, if it is not determined in step S308 that the lateral distance D is longer than the third reference distance D3 (step S308/NO), the control flow illustrated in Fig. 11 is terminated.

While it is determined NO in step S307 and it is determined YES in step S308, the processing in step S307 and the processing in step S308 are repeated. Then, if it is determined in step S307 that the reference time has elapsed (step S307/YES), the processing proceeds to step S309. In step S309, the identification section 23 identifies that the own vehicle 1 is positioned in the second vehicle line, to which the other vehicle 2 does not belong, and then the control flow illustrated in Fig. 11 is terminated.

As described above, the case where it is determined YES in step S307 is the case where it is determined YES in step S308 at least for the reference time. Thus, such a case corresponds to a case where the own vehicle 1 remains positioned in the second vehicle line at least for the reference time. That is, in the second example illustrated in Fig. 11, in the case where the own vehicle 1 remains positioned in the second vehicle line at least for the reference time, the identification section 23 identifies that the own vehicle 1 is positioned in the second vehicle line. The reference time in step S307 is the same as the reference time in step S304.

As it has been described so far, in the second example illustrated in Fig. 11, the identification section 23 does not execute the second identification processing but executes the first identification processing as the identification processing to identify the vehicle line, in which the own vehicle 1 is positioned in the group. Here, in the first identification processing, in the case where the own vehicle 1 remains positioned in one vehicle line of the first vehicle line, to which the other vehicle 2 belongs, and the second vehicle line, to which the other vehicle 2 does not belong, at least for the reference time, the identification section 23 identifies that the own vehicle 1 is positioned in the one vehicle line. In this way, in the case where the position of the own vehicle 1 is changed temporarily, it is possible to suppress a change in the identification result of the vehicle line, in which the own vehicle 1 is positioned in the group. Accordingly, it is possible to suppress the frequent change in the identification result by the identification section 23. Therefore, it is possible to improve robustness of the driving assistance operation.

In this embodiment, as in the first example illustrated in Fig. 6 and the second example illustrated in Fig. 11, in the case where the group travel is made, in the first identification processing, the identification section 23 identifies whether the vehicle line identification target vehicle (the own vehicle 1 in the above example) is positioned in the first vehicle line, to which the vehicle line identification reference vehicle (the other vehicle 2 in the above example) belongs, or is positioned in the second vehicle line, to which the vehicle line identification reference vehicle does not belong, on the basis of the surrounding environment information of the vehicle line identification target vehicle. Then, the execution section 22 executes the driving assistance operation on the basis of the identification result by the identification section 23. In this way, when the group travel is made, it is possible to appropriately execute the driving assistance operation according to a traffic condition around the own vehicle 1. Therefore, it is possible to appropriately assist with driving by the rider of the motorcycle 1 in the group travel.

The identification section 23 may execute the processing in only one of the first example illustrated in Fig. 6 and the second example illustrated in Fig. 11, for example. However, the identification section 23 may execute the processing in both of the first example illustrated in Fig. 6 and the second example illustrated in Fig. 11. In this case, the execution section 22 may respectively use the identification result in the first example illustrated in Fig. 6 and the identification result in the second example illustrated in Fig. 11 for mutually different types of the driving assistance operation. In the first example illustrated in Fig. 6, the second identification processing is executed. Thus, it is possible to identify the position of the vehicle line identification target vehicle (the own vehicle 1 in the above example) in the group with the high degree of accuracy. Meanwhile, in the second example illustrated in Fig. 11, the second identification processing is not executed, but the first identification processing is executed. Thus, it is possible to suppress the frequent change in the identification result of the vehicle line, in which the vehicle line identification target vehicle (the own vehicle 1 in the above example) is positioned. Therefore, it is possible to improve the robustness of the driving assistance operation.

For example, the identification section 23 may execute the vehicle control operation (for example, the adaptive cruise control) on the basis of the identification result in the second example illustrated in Fig. 11. That is, the identification section 23 may execute the vehicle control operation on the basis of the identification result in the first identification processing. In this way, it is possible to improve the robustness of the vehicle control operation. Alternatively, the identification section 23 may execute the notification operation (for example, the display operation to display, on the display device 13, the information on the position of the own vehicle 1 in the group) on the basis of the identification result in the first example illustrated in Fig. 6. That is, the identification section 23 may execute the notification operation on the basis of the identification result by the second identification processing. In this way, it is possible to improve accuracy of the notified information by the notification operation.

Here, based on the various parameters, the identification section 23 may switch the identification processing between the processing in the first example illustrated in Fig. 6 and the processing in the second example illustrated in Fig. 11. An example of such a parameter is the lane width of the travel road. For example, when the lane width of the travel road is wider than a reference lane width, the identification section 23 may execute the processing in the first example illustrated in Fig. 6. On the other hand, when the lane width of the travel road is narrower than the reference lane width, the identification section 23 may execute the processing in the second example illustrated in Fig. 11. In other words, when the lane width of the travel road is wider than the reference lane width, the identification section 23 may permit the second identification processing. On the other hand, when the lane width of the travel road is narrower than the reference lane width, the identification section 23 may prohibit the second identification processing. In this way, in the case where the lane width of the travel road is excessively narrow and thus necessity to identify whether the own vehicle 1 is positioned between the first vehicle line and the second vehicle line is low, the second identification processing can be prohibited.

The above description has been made on the example in which the identification processing of the position of the own vehicle 1 in the group is executed on the basis of the surrounding environment information in front of the own vehicle 1. However, the identification section 23 may execute the identification processing of the position of the own vehicle 1 in the group on the basis of at least one of the surrounding environment information behind the own vehicle 1 and the surrounding environment information on a side of the own vehicle 1.

The above description has primarily been made on the example in which the vehicle line identification target vehicle is the own vehicle 1 and the vehicle line identification reference vehicle is the other vehicle 2. However, the vehicle line identification target vehicle may be the other vehicle 2, and the vehicle line identification reference vehicle may be the own vehicle 1. In the case where the vehicle line identification target vehicle is the other vehicle 2 and the vehicle line identification reference vehicle is the own vehicle 1, the vehicle line identification target vehicle may be any of the plural other vehicles 2.

In the case where the vehicle line identification target vehicle is the other vehicle 2 and the vehicle line identification reference vehicle is the own vehicle 1, in the first identification processing, the identification section 23 identifies whether the other vehicle 2 is positioned in the first vehicle line, to which the own vehicle 1 belongs, or the other vehicle 2 is positioned in the second vehicle line, to which the own vehicle 1 does not belong. For example, similar to the above-described first example illustrated in Fig. 6 or the above-described second example illustrated in Fig. 11, the first identification processing can be executed on the basis of the lateral distance D between the own vehicle 1 and the other vehicle 2. In addition, in the second identification processing, the identification section 23 identifies whether the other vehicle 2 is positioned between the first vehicle line and the second vehicle line. For example, similar to the above-described first example illustrated in Fig. 6, the second identification processing can be executed on the basis of the lateral distance D between the own vehicle 1 and the other vehicle 2.

### <Effects of Controller>

A description will be made on effects of the controller 20 according to the embodiment of the invention.

In the controller 20, in the case where the group travel in which the group made up of the plural motorcycles travels in the plural vehicle lines is made, in the first identification processing, the identification section 23 identifies whether the vehicle line identification target vehicle (the own vehicle 1 in the above example), which is the motorcycle constituting the group, is positioned in the first vehicle line, to which the vehicle line identification reference vehicle (the other vehicle 2 in the above example), which is the motorcycle constituting the group belongs, or is positioned in the second vehicle line, to which the vehicle line identification reference vehicle does not belong, on the basis of the surrounding environment information of the vehicle line identification target vehicle. Then, the execution section 22 executes the driving assistance operation on the basis of the identification result by the identification section 23. In this way, when the group travel is made, it is possible to appropriately execute the driving assistance operation according to the traffic condition around the own vehicle 1. Therefore, it is possible to appropriately assist with driving by the rider of the motorcycle 1 in the group travel.

Preferably, in the controller 20, in addition to the first identification processing, the identification section 23 executes the second identification processing to identify whether the vehicle line identification target vehicle is positioned between the first vehicle line and the second vehicle line. In this way, it is possible to identify whether the vehicle line identification target vehicle is positioned in the first vehicle line or is positioned in the second vehicle line, and it is also possible to identify whether the vehicle line identification target vehicle is positioned between the first vehicle line and the second vehicle line. Therefore, it is possible to identify the position of the vehicle line identification target vehicle in the group with the high degree of accuracy.

Preferably, in the controller 20, the identification section 23 executes the first identification processing and the second identification processing on the basis of the lateral distance D between the vehicle line identification target vehicle and the vehicle line identification reference vehicle. In this way, it is possible to appropriately identify whether the vehicle line identification target vehicle is positioned in the first vehicle line, is positioned in the second vehicle line, or is positioned between the first vehicle line and the second vehicle line.

Preferably, in the controller 20, the identification section 23 determines the lateral distance D on the basis of the shape information of the travel road. In this way, even in the case where the plural motorcycles constituting the group travel the curve, the swept path 5 of the own vehicle 1 can appropriately be identified. Thus, the lateral distance D can appropriately be determined.

Preferably, in the controller 20, the lateral distance D is the distance that is predicted in the future. In this way, compared to the case where the identification processing is executed by using the current lateral distance D, it is possible to suppress the delay in the reflection of the change in the lateral distance D to the driving assistance operation.

Preferably, in the controller 20, in the first identification processing, in the case where the lateral distance D is shorter than the first reference distance D1 or is longer than the second reference distance D2, which is longer than the first reference distance D1, the identification section 23 identifies that the vehicle line identification target vehicle is positioned in one of the first vehicle line and the second vehicle line. In the second identification processing, in the case where the lateral distance D is longer than the first reference distance D1 and is shorter than the second reference distance D2, the identification section 23 identifies that the vehicle line identification target vehicle is positioned between the first vehicle line and the second vehicle line. In this way, it is possible to appropriately identify whether the vehicle line identification target vehicle is positioned in one of the first vehicle line and the second vehicle line or is positioned between the first vehicle line and the second vehicle line on the basis of the lateral distance D.

Preferably, in the controller 20, in the first identification processing, the identification section 23 identifies that the vehicle line identification target vehicle is positioned in the first vehicle line when the lateral distance D is shorter than the first reference distance D1, and identifies that the vehicle line identification target vehicle is positioned in the second vehicle line when the lateral distance D is longer than the second reference distance D2. In this way, it is possible to appropriately identify whether the vehicle line identification target vehicle is positioned in the first vehicle line or is positioned in the second vehicle line on the basis of the lateral distance D.

Preferably, in the controller 20, in the first identification processing, in the case where the vehicle line identification target vehicle remains positioned in one vehicle line of the first vehicle line and the second vehicle line at least for the reference time, the identification section 23 identifies that the vehicle line identification target vehicle is positioned in the one vehicle line. In this way, in the case where the position of the vehicle line identification target vehicle is changed temporarily, it is possible to suppress the change in the identification result of the vehicle line, in which the vehicle line identification target vehicle is positioned in the group. Accordingly, it is possible to suppress the frequent change in the identification result by the identification section 23. Therefore, it is possible to improve the robustness of the driving assistance operation.

Preferably, in the controller 20, the vehicle line identification target vehicle is the own vehicle 1 that is mounted with the controller 20. In this way, it is possible to identify the position of the own vehicle 1 in the group by the identification processing executed by the identification section 23. Thus, when the group travel is made, the driving assistance operation is appropriately executed according to the traffic condition around the own vehicle 1. Therefore, in the group travel, driving by the rider of the motorcycle 1 is appropriately assisted.

Preferably, in the controller 20, the vehicle line identification target vehicle is the own vehicle 1 that is mounted with the controller 20, the rider (more specifically, the rider who is the driving assistance target) is the rider of the own vehicle 1, the driving assistance operation includes the vehicle control operation to control the behavior of the own vehicle 1, and the execution section 22 executes the vehicle control operation on the basis of the identification result by the first identification processing. Accordingly, it is possible to suppress the frequent change in the identification result of the vehicle line, in which the own vehicle 1 is positioned. Therefore, it is possible to improve the robustness of the vehicle control operation.

Preferably, in the controller 20, the vehicle line identification target vehicle is the own vehicle 1 that is mounted with the controller 20, the rider (more specifically, the rider who is the driving assistance target) is the rider of the own vehicle 1, the driving assistance operation includes the vehicle control operation to control the behavior of the own vehicle 1 and the notification operation to notify the rider, and the execution section 22 executes the vehicle control operation on the basis of the identification result by the first identification processing and executes the notification operation on the basis of the identification result by the second identification processing. In this way, it is possible to improve the accuracy of the information to notify by the notification operation while improving the robustness of the vehicle control operation.

The invention is not limited to the embodiment that has been described. For example, only a part of the embodiment may be implemented.

### Reference Signs List

1: Motorcycle (own vehicle)
2: Motorcycle (other vehicle)
2a: Other vehicle
2b: Other vehicle
2c: Other vehicle
2d: Other vehicle
3: Detection range
4: Center
5: Swept path
10: Rider-assistance system
11: Engine
12: Hydraulic pressure control unit
13: Display device
14: Surrounding environment sensor
15: Input device
16: Navigation system
17: Front-wheel rotational frequency sensor
18: Rear-wheel rotational frequency sensor
20: Controller
21: Acquisition section
22: Execution section
23: Identification section
D: Lateral distance
D1: First reference distance
D2: Second reference distance
D3: Third reference distance

## Claims

1. A controller (20) for a rider-assistance system (10) that assists with driving by a rider, the controller comprising:
an execution section (22) that executes driving assistance operation to assist with driving by the rider, and further comprising:
an identification section (23), in the case where group travel in which a group made up of plural motorcycles travels in plural vehicle lines is made, the identification section (23) identifying in first identification processing whether a vehicle line identification target vehicle (1), which is the motorcycle constituting the group, is positioned in a first vehicle line, to which a vehicle line identification reference vehicle (2) as the motorcycle constituting the group belongs, or is positioned in a second vehicle line, to which the vehicle line identification reference vehicle (2) does not belong, on the basis of surrounding environment information of the vehicle line identification target vehicle (1), wherein
the execution section (22) executes the driving assistance operation on the basis of an identification result by the identification section (23).

2. The controller according to claim 1, wherein
in addition to the first identification processing, the identification section (23) executes second identification processing to identify whether the vehicle line identification target vehicle (1) is positioned between the first vehicle line and the second vehicle line.

3. The controller according to claim 2, wherein
the identification section (23) executes the first identification processing and the second identification processing on the basis of a lateral distance (D) between the vehicle line identification target vehicle (1) and the vehicle line identification reference vehicle (2).

4. The controller according to claim 3, wherein
the identification section (23) determines the lateral distance (D) on the basis of shape information of a travel road.

5. The controller according to claim 3, wherein
the lateral distance (D) is a distance that is predicted in the future.

6. The controller according to claim 3, wherein
the identification section (23):
identifies in the first identification processing that the vehicle line identification target vehicle (1) is positioned in one of the first vehicle line and the second vehicle line in the case where the lateral distance (D) is shorter than a first reference distance (D1) or is longer than a second reference distance (D2), which is longer than the first reference distance (D1); and
identifies in the second identification processing that the vehicle line identification target vehicle (1) is positioned between the first vehicle line and the second vehicle line in the case where the lateral distance (D) is longer than the first reference distance (D1) and is shorter than the second reference distance (D2).

7. The controller according to claim 6, wherein
in the first identification processing, the identification section (23):
identifies that the vehicle line identification target vehicle (1) is positioned in the first vehicle line in the case where the lateral distance (D) is shorter than the first reference distance (D1); and
identifies that the vehicle line identification target vehicle (1) is positioned in the second vehicle line in the case where the lateral distance (D) is longer than the second reference distance (D2).

8. The controller according to claim 1, wherein
in the first identification processing, in the case where the vehicle line identification target vehicle (1) remains positioned in one vehicle line of the first vehicle line and the second vehicle line at least for a reference time, the identification section (23) identifies that the vehicle line identification target vehicle (1) is positioned in the one vehicle line.

9. The controller according to any one of claims 1 to 8, wherein
the vehicle line identification target vehicle is an own vehicle (1) that is mounted with the controller (20).

10. The controller according to claim 9, wherein
the rider is a rider of the own vehicle (1),
the driving assistance operation includes vehicle control operation to control behavior of the own vehicle (1), and
the execution section (22) executes the vehicle control operation on the basis of an identification result by the first identification processing.

11. The controller according to any one of claims 2 to 7, wherein
the vehicle line identification target vehicle is an own vehicle (1) that is mounted with the controller (20),
the rider is a rider of the own vehicle (1),
the driving assistance operation includes vehicle control operation to control behavior of the own vehicle (1) and notification operation to notify the rider, and
the execution section (22):
executes the vehicle control operation on the basis of an identification result by the first identification processing; and
executes the notification operation on the basis of an identification result by the second identification processing.

12. A control method for a rider-assistance system (10) that assists with driving by a rider, the control method comprising:
executing driving assistance operation to assist with driving by the rider by an execution section (22) of a controller (20), and further comprising:
in the case where group travel in which a group made up of plural motorcycles travels in plural vehicle lines is made, identifying in first identification processing by an identification section (23) of the controller (20) whether a vehicle line identification target vehicle (1), which is the motorcycle constituting the group, is positioned in a first vehicle line, to which a vehicle line identification reference vehicle (2) as the motorcycle constituting the group belongs, or is positioned in a second vehicle line, to which the vehicle line identification reference vehicle (2) does not belong, on the basis of surrounding environment information of the vehicle line identification target vehicle (1), wherein
the execution section (22) executes the driving assistance operation on the basis of an identification result by the identification section (23).
